# EUROPEAN PATENT APPLICATION

(11) **EP 4 765 416 A1**
(43) Date of publication of application: **24.06.2026**
(21) Application number: 24929877.9
(22) Date of filing: 04.11.2024
(51) Int. Cl.: H01M 50/342, H01M 50/383, H01M 50/258, H01M 50/249

(54) **BATTERY MODULE, AND BATTERY PACK AND VEHICLE INCLUDING SAME**

(30) Priority: 13.03.2024 KR 20240035384
(71) Applicant: LG Energy Solution, Ltd., Seoul 07335 (KR)
(72) Inventor: PARK, Ju-Hun, Daejeon 34122 (KR); JUNG, Hye-Mi, Daejeon 34122 (KR)
(74) Representative: Plasseraud IP
(86) International application number: PCT/KR2024/017211
(87) International publication number: WO 2025/192816

(57) **Abstract**

Disclosed is a battery module, and a battery pack and a vehicle including the same. The battery module includes a battery cell stack in which a plurality of battery cells are stacked; a module case in which the battery cell stack is accommodated; and a flame suppression pad arranged between the plurality of battery cells within the module case, and the module case has a rupture portion formed to be ruptured by gas.

## Description

### TECHNICAL FIELD

This application is based on and claims priority from Korean Patent Application No. 10-2024-0035384, filed on March 13, 2024, with the Korean Intellectual Property Office, the disclosure of which is incorporated herein in its entirety by reference.

The present disclosure relates to a battery module, and a battery pack and a vehicle including the same, and more specifically, to a battery module capable of smoothly discharging flame, gas or high-temperature particles, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

In a conventional battery module, a top cover with a venting hole formed therein may be coupled to the case with an adhesive. However, when the temperature inside the battery module rises and the adhesive melts, the top cover is separated from the case, and flame or gas is simultaneously discharged in an undesirable direction through the gap between the top cover and the case.

In addition, in such a case, the venting hole does not function properly, and the flame or gas may propagate to other battery cells or other battery modules, causing a thermal runaway phenomenon. If the flame leaks to the outside due to the thermal runaway phenomenon, there is a problem that the driver of the electric vehicle may suffer burns or be put in a dangerous situation.

Alternatively, there is a problem in that the battery module or battery pack is damaged or burned down by a chain reaction of flames caused by flame propagation, so it may be impossible to secure the stability of the battery module or battery pack.

### DISCLOSURE

### Technical Problem

Therefore, the present disclosure is directed to providing a battery module capable of smoothly discharging flame, gas or high-temperature particles, and a battery pack and a vehicle including the same.

In addition, the present invention is directed to providing a battery module capable of discharging flame, gas or high-temperature particles in a preset direction, and a battery pack and a vehicle including the same.

In addition, the present invention is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells are stacked; a module case in which the battery cell stack is accommodated; and a flame suppression pad arranged between the plurality of battery cells within the module case, wherein the module case has a rupture portion formed to be ruptured by gas.

In an embodiment, the module case may include an upper module case, and the rupture portion may be formed in the upper module case.

In an embodiment, the upper module case may include a close contact portion that is in close contact with the flame suppression pad; and a protrusion that protrudes from the close contact portion.

In an embodiment, the close contact portion may be in close contact with the flame suppression pad at an upper side of the flame suppression pad.

In an embodiment, the protrusion may protrude from an upper side of the battery cell, and a preset buffer space may be formed between the protrusion and the battery cell.

In an embodiment, the protrusion may include a first portion formed to be inclined upward from the close contact portion; a second portion extending horizontally from the first portion; and a third portion formed to be inclined downward from the second portion, and the rupture portion may be formed in the second portion.

In an embodiment, slopes of the first portion and the third portion may have an angle that allows flame, gas or high-temperature particles to move toward the rupture portion.

In an embodiment, the rupture portion may be a notching portion formed with a thin thickness to facilitate rupture.

In an embodiment, the notching portion may include a first groove formed in a vertical direction; a second groove spaced apart from the first groove by a preset interval and formed in the vertical direction; a third groove formed in the vertical direction between the first groove and the second groove; a fourth groove connected to the first groove, the second groove and the third groove in a horizontal direction at one end of the first groove, the second groove and the third groove; and a fifth groove spaced apart from the fourth groove by a preset interval and connected to the first groove, the second groove and the third groove in the horizontal direction at the other end of the first groove, the second groove and the third groove.

In an embodiment, the third groove may be located at a center portion between the first groove and the second groove.

In an embodiment, the notching portion may further include a sixth groove formed in the horizontal direction between the fourth groove and the fifth groove.

In an embodiment, the module case may be formed in an integral form.

In an embodiment, the module case may include a lower module case, and the rupture portion may be formed in the lower module case.

Meanwhile, according to another aspect of the present disclosure, there may be provided a battery pack including the battery module described above, and a vehicle including the battery module.

### Advantageous Effects

The embodiments of the present disclosure have the effect of smoothly discharging flame, gas or high-temperature particles in a direction intended by the designer.

In addition, the present disclosure has the effect of discharging flame, gas or high-temperature particles in a preset direction.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic overall perspective view showing a battery module according to an embodiment of the present disclosure.
FIG. 2 is an enlarged view showing part A of FIG. 1.
FIG. 3 is a plane view showing the battery module according to an embodiment of the present disclosure.
FIG. 4 is an enlarged view showing part B of FIG. 3.
FIG. 5 is a drawing showing a modified embodiment for FIG. 4.
FIG. 6 is a cross-sectional view taken along line a-a' of FIG. 1.
FIG. 7 is a cross-sectional view showing a rupture portion ruptured by gas generation in FIG. 6.
FIG. 8 is an enlarged view showing part C of FIG. 6.
FIG. 9 is a drawing showing a modified embodiment for FIG. 8.
FIG. 10 is a drawing showing a modified embodiment for FIG. 1.
FIG. 11 is a drawing schematically showing the configuration of a battery pack including the battery module according to each embodiment of the present disclosure.
FIG. 12 is a drawing for explaining a vehicle including the battery pack of FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

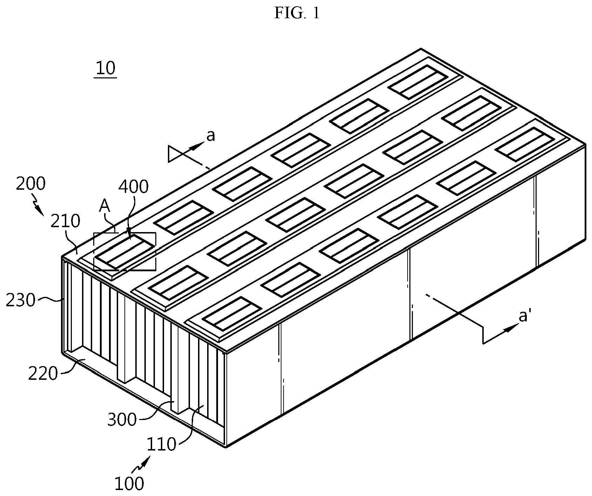

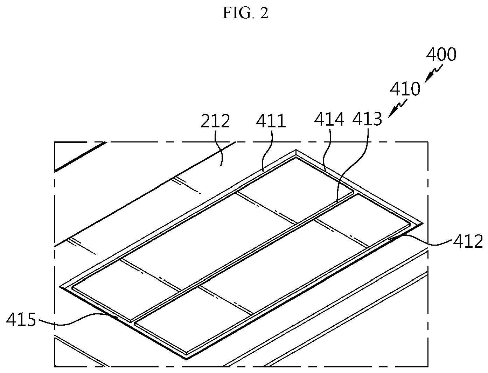

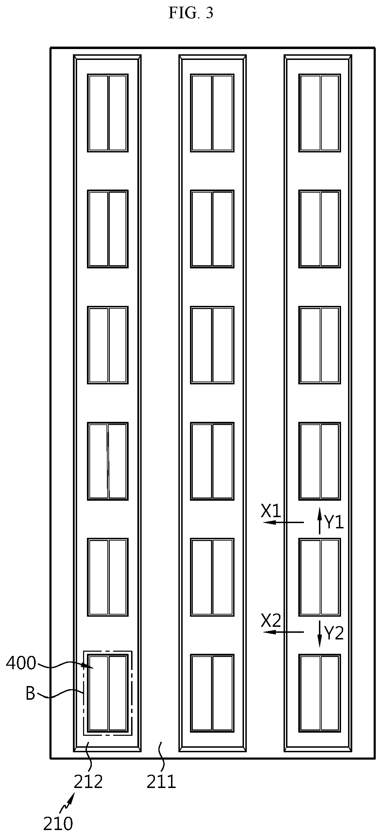

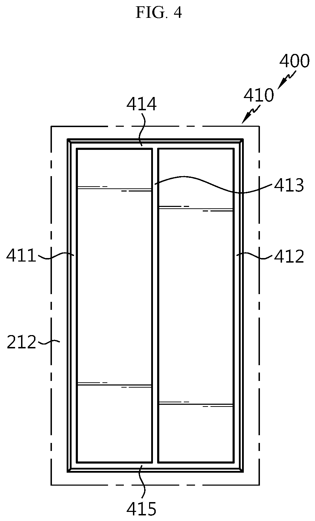

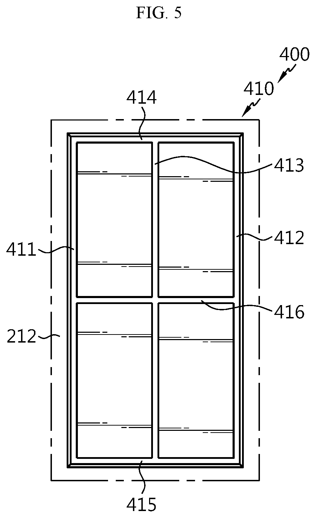

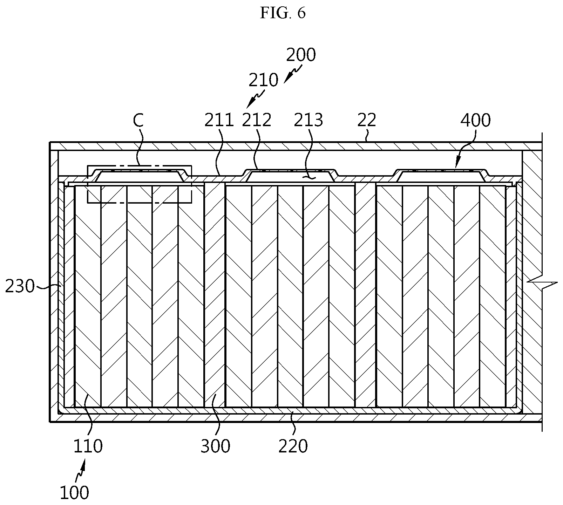

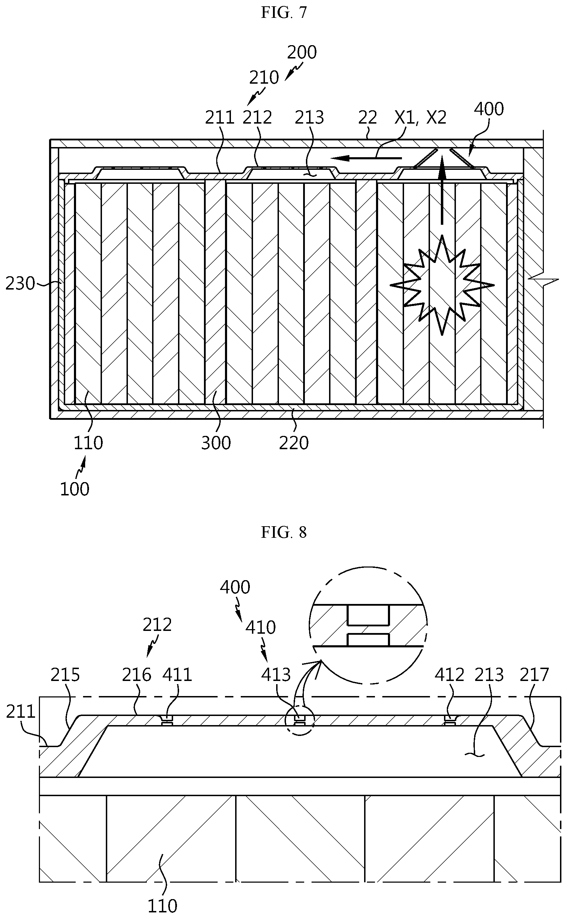

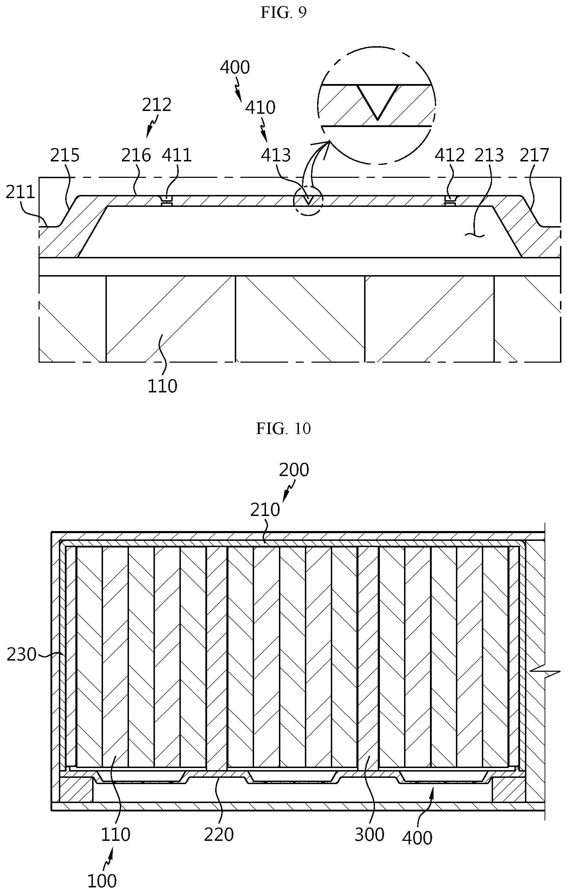

FIG. 1 is a schematic overall perspective view showing a battery module according to an embodiment of the present disclosure, FIG. 2 is an enlarged view showing part A of FIG. 1, FIG. 3 is a plane view showing the battery module according to an embodiment of the present disclosure, FIG. 4 is an enlarged view showing part B of FIG. 3, FIG. 5 is a drawing showing a modified embodiment for FIG. 4, FIG. 6 is a cross-sectional view taken along line a-a' of FIG. 1, FIG. 7 is a cross-sectional view showing a rupture portion ruptured by gas generation in FIG. 6, FIG. 8 is an enlarged view showing part C of FIG. 6, FIG. 9 is a drawing showing a modified embodiment for FIG. 8, and FIG. 10 is a drawing showing a modified embodiment for FIG. 1.

Referring to FIG. 1, a battery module 10 according to an embodiment of the present disclosure includes a battery cell stack 100, a module case 200, and a flame suppression pad 300.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

A plurality of battery cells 110 may be electrically connected via a bus bar (not shown). However, the bus bar is not shown in the drawings.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

The battery cell stack 100 is accommodated in the module case 200. Also, referring to FIGS. 1 and 3, a rupture portion 400 that is ruptured by gas is formed in the module case 200. For example, when a thermal event occurs in any battery cell 110 inside the module case 200, gas or particles (e.g., high-temperature particles) may be generated, and the rupture portion 400 may be ruptured by the gas or particles.

The module case 200 may include an upper module case 210, a lower module case 220, and a side module case 230. In addition, the rupture portion 400 may be formed in the upper module case 210, but is not limited thereto. In another embodiment, referring to FIG. 10, the rupture portion 400 may be formed in the lower module case 220.

Referring to FIG. 6, the upper module case 210 may be configured to include a close contact portion 211 and a protrusion 212. The close contact portion 211 is in close contact with the flame suppression pad 300. For example, the close contact portion 211 may be in close contact with the flame suppression pad 300 at the upper side of the flame suppression pad 300.

At least one battery cell 110 may be arranged between one flame suppression pad 300 and another adjacent flame suppression pad 300. The flame suppression pad 300 will be described later in more detail.

If the close contact portion 211 is in close contact with the flame suppression pad 300 in this way, flame, gas or high-temperature particles generated from any battery cell 110 are blocked by the flame suppression pad 300. That is, the configuration may prevent flame, gas or high-temperature particles from being propagated to other battery cells 110.

This has the effect of preventing pressure dispersion due to gas generated from any battery cell 110 and concentrating the pressure inside the module case 200 on the rupture portion 400.

The protrusion 212 may be formed to protrude from the close contact portion 211 at the upper side of the battery cell 110 based on FIG. 8. As shown in FIG. 8, if the protrusion 212 protrudes from the close contact portion 211, a preset buffer space 213 may be formed between the protrusion 212 and the battery cell 110.

Here, the buffer space 213 is a space where flame, gas, or high-temperature particles temporarily stay at a location close to the rupture portion 400, and the pressure caused by the gas is concentrated in the buffer space 213 so that the rupture portion 400 is ruptured easily.

Referring to FIG. 8, the protrusion 212 may include a first portion 215, a second portion 216, and a third portion 217. The first portion 215 is formed to be inclined upward from the close contact portion 211. Also, the second portion 216 extends horizontally from the first portion 215. Also, the third portion 217 is formed to be inclined downward from the second portion 216. Also, the rupture portion 400 may be formed in the second portion 216.

Here, the first portion 215 and the third portion 217 may be formed to have an angle that allows flame, gas or high-temperature particles to move toward the rupture portion 400.

That is, referring to FIG. 7, flame, gas or high-temperature particles generated from the battery cell 110 may move to the rupture portion 400 along the slope of the first portion 215 and the slope of the second portion 216, and thereby may be easily discharged to the outside of the module case 200 when the rupture portion 400 is ruptured.

Referring to FIGS. 2 and 4, the rupture portion 400 may be configured as a notching portion 410 formed to have a thin thickness to facilitate rupture.

Referring to FIG. 4, the notching portion 410 may include a first groove 411, a second groove 412, a third groove 413, a fourth groove 414, and a fifth groove 415.

The first groove 411 is formed in a vertical direction at the left end based on FIG. 4. Hereinafter, the formation directions of the second groove 412 to the fifth groove 415 will be described based on FIG. 4. In addition, the second groove 412 is spaced apart from the first groove 411 by a preset interval and formed in a vertical direction at the right end. In addition, the third groove 413 is formed in a vertical direction between the first groove 411 and the second groove 412.

The third groove 413 may be located at the center portion between the first groove 411 and the second groove 412. That is, as in FIG. 4, the distance from the first groove 411 to the third groove 413 and the distance from the second groove 412 to the third groove 413 may be the same and may be formed symmetrically to each other. However, the present disclosure is not limited thereto, and the location of the third groove 413 may vary.

The fourth groove 414 is connected to the first groove 411, the second groove 412 and the third groove 413 in a horizontal direction at one end (the upper end in FIG. 4) of the first groove 411, the second groove 412 and the third groove 413. In addition, the fifth groove 415 is spaced apart from the fourth groove 414 by a preset interval, and is connected to the first groove 411, the second groove 412 and the third groove 413 in a horizontal direction at the other end (the lower end in FIG. 4) of the first groove 411, the second groove 412 and the third groove 413.

With this structure, the rupture portion 400 may be formed in a rectangular shape, but the shape of the rupture portion 400 is not limited thereto, and the shape of the rupture portion 400 may be more diverse. For example, the rupture portion 400 may have various shapes such as a square shape, a diamond shape, a circular shape, a diagonal shape, a straight shape, etc.

Referring to FIG. 5 as another embodiment, the rupture portion 400 may further include a sixth groove 416 in the shape of FIG. 4. The sixth groove 416 may be formed in a horizontal direction between the fourth groove 414 and the fifth groove 415.

The sixth groove 416 may be located at the center portion between the fourth groove 414 and the fifth groove 415. As in FIG. 5, the distance from the fourth groove 414 to the sixth groove 416 and the distance from the fifth groove 415 to the sixth groove 416 may be the same and may be formed symmetrically to each other. However, the present disclosure is not limited thereto, and the position of the sixth groove 416 may vary.

Referring to FIG. 8, the notching portion 410, namely the first groove 411, the second groove 412 and the third groove 413, may have the same thickness. Alternatively, in another embodiment, among the first groove 411, the second groove 412 and the third groove 413, the third groove 413 may be formed to have the smallest thickness so as to rupture more easily in the center portion. If the third groove 413 is formed to have the smallest thickness, the third groove 413 is ruptured easily as in FIG. 7, so that the rupture portion 400 may be opened at both sides.

Alternatively, as in FIG. 8, the notching portion 410, namely the first groove 411, the second groove 412 and the third groove 413, may all have the same shape, but as in FIG. 9, they may have different shapes.

Referring to FIG. 9, the first groove 411 and the second groove 412 are formed in a straight line shape identically, but the third groove 413 may be formed in a triangular shape, differently from the first groove 411 and the second groove 412. However, the above-described shape is only one embodiment, and the first groove 411, the second groove 412, and the third groove 413 may have various shapes.

Meanwhile, if the battery module 10 is accommodated in the pack case 21 of the battery pack 20, as shown in FIG. 6, since the space between the upper pack case 22 and the upper module case 210 may be narrow, there may not be enough discharge holes through which flame, gas, or high-temperature particles may be discharged when the rupture portion 400 ruptures.

However, in the battery module 10 according to an embodiment of the present disclosure, as described above, since the rupture portion 400 may be opened to both sides as the third groove 413 ruptures as shown in FIG. 7, even if the space between the upper pack case 22 and the upper module case 210 is narrow, flame, gas, or high-temperature particles may be sufficiently discharged in a preset direction.

Also, if the rupture portion 400 is ruptured as in FIG. 7, flame, gas, or high-temperature particles may move in the Y1 and Y2 directions as in FIG. 3 and then move in the X1 and X2 directions through the space between the upper pack case 22 and the upper module case 210 (see FIG. 7).

Accordingly, the battery module 10 according to an embodiment of the present disclosure has the effect of enabling directional venting that may discharge flame, gas, or high-temperature particles in a direction intended by the designer.

The module case 200 surrounds the battery cells 110 and thereby protects the battery cells 110 from external vibrations or shocks.

The module case 200 may include a mica plate made of mica having both thermal insulation and heat resistance to prevent flame leakage. Here, the mica plate may have not only a flat mica plate shape but also a shape in which flat and curved surfaces are mixed.

The module case 200 may be formed in a shape corresponding to the shape of the battery cell stack 100. For example, if the battery cell stack 100 is formed in a hexahedral shape with a rectangular cross-section, the module case 200 may also be formed in a hexahedral shape corresponding thereto.

The module case 200 may be manufactured by, for example, bending a metal plate, whereby the module case 200 may be formed in an integral form. If the module case 200 is manufactured in an integral form, the coupling process may become easy and simple. Alternatively, the module case 200 may be provided in a separate form and coupled by welding, etc. However, the material of the module case 200 is not limited to a metal material.

If the module case 200 is formed in an integral form or coupled by welding, an adhesive is unnecessary. Thus, even if the temperature rises inside the battery module 10, the upper module case 210 does not separate from the side module case 230, thereby preventing flame, gas, or high-temperature particles from being discharged at once in an undesirable direction.

The flame suppression pad 300 blocks flame, gas, or high-temperature particles generated from any battery cell 110 from propagating to other battery cells 110. To this end, as shown in FIG. 6, the flame suppression pad 300 may be arranged between the plurality of battery cells 110 within the module case 200. For example, the flame suppression pad 300 may be arranged between five battery cells 110, but is not limited thereto.

Here, the flame suppression pads 300 may be arranged at the same interval or may be arranged at different intervals.

The flame suppression pad 300 may be made of various materials, and for example, may be made of a silicone foam pad to prevent the transmission of flame and heat generated from the battery cell 110. The silicone foam pad is a foamed pad with pores formed inside, and has high thermal and chemical stability, and excellent flame retardancy and insulation properties. Therefore, when the flame suppression pad 300 is made of a silicone foam pad, the transmission of flame, gas, or high-temperature particles may be reliably prevented.

In addition, the flame suppression pad 300 may also play a role in absorbing swelling when swelling (a phenomenon in which the battery cell 110 is inflated) occurs in the battery cell 110.

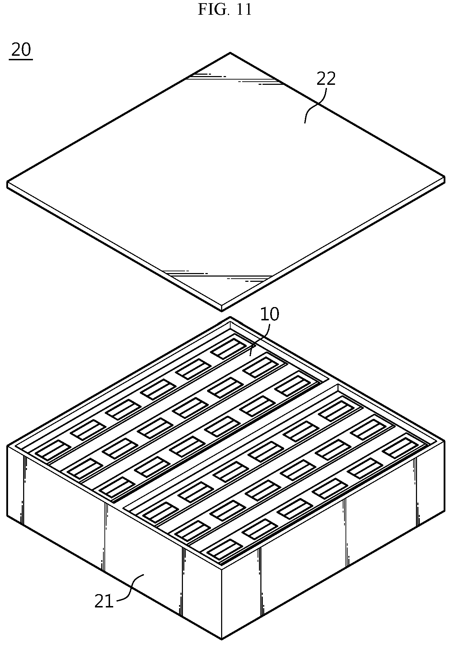

FIG. 11 is a drawing schematically showing the configuration of a battery pack including the battery module according to each embodiment of the present disclosure.

Referring to FIG. 11, a battery pack 20 according to an embodiment of the present disclosure may include one or more battery modules 10 according to each embodiment of the present disclosure described above.

In addition, the battery pack 20 may further include a pack case 21 for accommodating the battery module 10, and various devices for controlling charging and discharging of the battery cell 110 included in the battery module 10, such as a BMS, a current sensor, and a fuse.

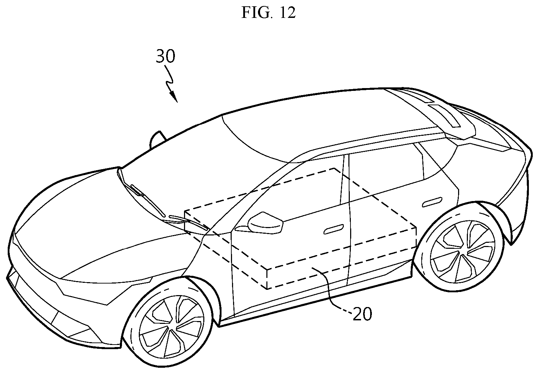

FIG. 12 is a drawing for explaining a vehicle including the battery pack of FIG. 11.

Referring to FIG. 12, a vehicle 30 according to an embodiment of the present disclosure may include one or more battery modules 10 according to each embodiment of the present disclosure or one or more battery packs 20 according to each embodiment of the present disclosure. Here, the battery pack 20 may include one or more aforementioned battery module 10 according to each embodiment of the present disclosure.

Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells are stacked;
a module case in which the battery cell stack is accommodated; and
a flame suppression pad arranged between the plurality of battery cells within the module case,
wherein the module case has a rupture portion formed to be ruptured by gas.

2. The battery module according to claim 1,
wherein the module case includes an upper module case, and
wherein the rupture portion is formed in the upper module case.

3. The battery module according to claim 2,
wherein the upper module case includes:
a close contact portion that is in close contact with the flame suppression pad; and
a protrusion that protrudes from the close contact portion.

4. The battery module according to claim 3,
wherein the close contact portion is in close contact with the flame suppression pad at an upper side of the flame suppression pad.

5. The battery module according to claim 3,
wherein the protrusion protrudes from an upper side of the battery cell, and a preset buffer space is formed between the protrusion and the battery cell.

6. The battery module according to claim 5,
wherein the protrusion includes:
a first portion formed to be inclined upward from the close contact portion;
a second portion extending horizontally from the first portion; and
a third portion formed to be inclined downward from the second portion,
wherein the rupture portion is formed in the second portion.

7. The battery module according to claim 6,
wherein slopes of the first portion and the third portion have an angle that allows flame, gas or high-temperature particles to move toward the rupture portion.

8. The battery module according to claim 6,
wherein the rupture portion is a notching portion formed with a thin thickness to facilitate rupture.

9. The battery module according to claim 8,
wherein the notching portion includes:
a first groove formed in a vertical direction;
a second groove spaced apart from the first groove by a preset interval and formed in the vertical direction;
a third groove formed in the vertical direction between the first groove and the second groove;
a fourth groove connected to the first groove, the second groove and the third groove in a horizontal direction at one end of the first groove, the second groove and the third groove; and
a fifth groove spaced apart from the fourth groove by a preset interval and connected to the first groove, the second groove and the third groove in the horizontal direction at the other end of the first groove, the second groove and the third groove.

10. The battery module according to claim 9,
wherein the third groove is located at a center portion between the first groove and the second groove.

11. The battery module according to claim 9,
wherein the notching portion further includes a sixth groove formed in the horizontal direction between the fourth groove and the fifth groove.

12. The battery module according to claim 1,
wherein the module case is formed in an integral form.

13. The battery module according to claim 1,
wherein the module case includes a lower module case, and
wherein the rupture portion is formed in the lower module case.

14. A battery pack comprising the battery module according to any one of claims 1 to 13.

15. A vehicle comprising the battery module according to any one of claims 1 to 13.
